# EUROPEAN PATENT SPECIFICATION

(11) **EP 2 022 021 B1**
(45) Date of publication and mention of the grant of the patent: **19.05.2010**
(21) Application number: 07733665.9
(22) Date of filing: 09.05.2007
(51) Int. Cl.: G08B 17/10

(54) **IMPROVEMENTS IN AND RELATING TO ELECTRICAL CONNECTION SYSTEMS**
VERBESSERUNGEN IN BEZUG AUF ELEKTRISCHE VERBINDUNGSSYSTEME
AMÉLIORATIONS RELATIVES AUX SYSTÈMES DE CONNEXION ÉLECTRIQUE

(30) Priority: 27.05.2006 GB 0610586
(43) Date of publication of application: 11.02.2009
(73) Proprietor: PROTEC FIRE DETECTION PLC, Nelson, Lancashire BB9 6RT (GB)
(72) Inventor: RUSSELL, Barrie, Clitheroe, Lancashire BB7 3LA (GB)
(74) Representative: Davies, Robert Ean
(86) International application number: PCT/GB2007/050244
(87) International publication number: WO 2007/138340

(56) References cited:
- WO-A-2005/059435
- WO-A-2005/124710
- US-A- 4 887 073
- US-A- 5 742 895

## Description

The present invention relates to electrical connection systems and finds particular but not exclusive use in electrical systems mounted in ceilings, such as fire or smoke detection systems.

Prior art smoke detection systems, such as those fitted in a commercial or industrial environment, comprise a plurality (often hundreds) of detectors, often daisy-chained together in loops including many tens of units.

Such detectors are often fitted to plasterboard or suspended ceilings, where a detector base unit is first installed and the detector itself is installed into the base at a later time, when the wiring and physical installation is complete.

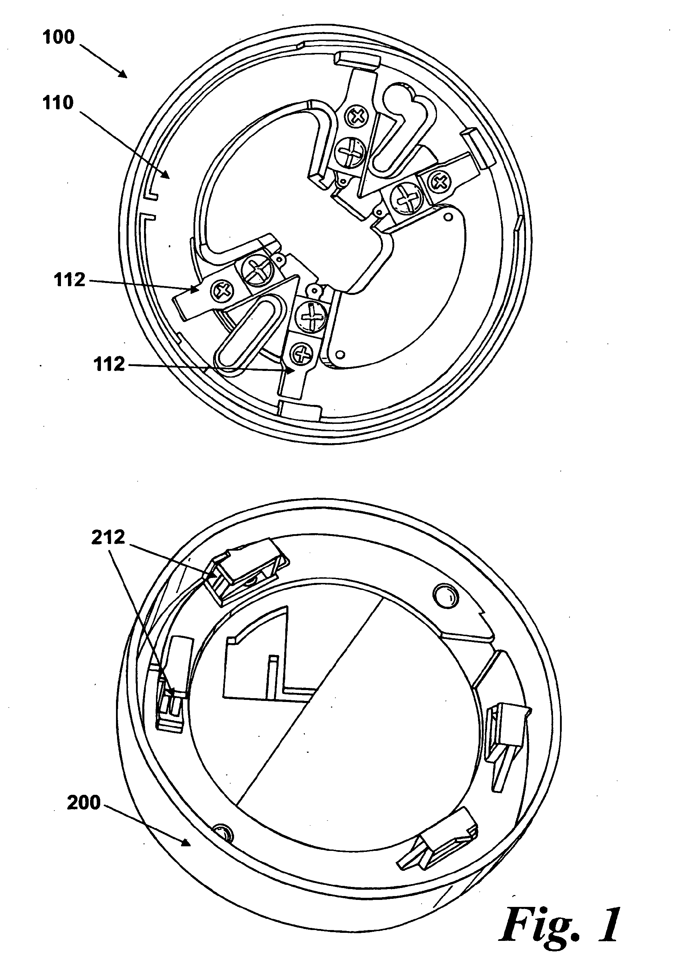

Figure 1 shows a typical prior art detector assembly 100, comprising a base unit 110 and a sensor unit 200.

Installing the detector base unit 110 involves provision of a first part of a detector base (not shown) inside the suspended ceiling or ceiling void, which connects to the detector base 110, which is located on the exposed surface of the ceiling. The first and second parts are connected (generally screwed) together to secure them in place. At the same time, cables are cut to length and connected to terminals 112 on the detector base 110 so that the circuit is complete and the final stage involves attaching the sensor unit 200 to the base, thereby completing the circuit. The sensor 200 is twisted into place in the base, so that terminals 212 on the sensor 200 engage with, and connect to, terminals 112 on the base unit 110, which both completes the circuit and holds the detector in position.

The cables which connect the detector bases together are specially specified and designed to withstand fire and heat damage. As such, they tend to be shrouded in physically tough insulation material. Cutting the cables to length to connect adjacent detector bases in the circuit and removing the appropriate amount of insulation, especially when working on a ladder, is difficult and prone to error. In particular, the internal connectors, beneath the outer insulation, can easily be damaged when the outer insulation is removed.

Furthermore, since the exposed conductors must then be connected to terminals 112 provided in the base 110, human error can result in the connections being made to the wrong terminals. Typically such an error is not detected until the installation is complete and locating the error requires extensive work, often involving removal of ceiling panels to locate the fault. On a circuit comprising over two hundred detectors, which is not uncommon, the task of finding one detector which has been miswired or has a damaged cable is far from trivial.

US patent 5742895 discloses a device used in a multimedia communications system, formed with a transceiver unit for transmitting and receiving information signals to and from the inside of a room and a base unit adapted to be mounted to a wall of the room to detachably support the transceiver unit. The transceiver unit has a plug surface on which a plug projects, a circular wall projecting on the plug surface to surround the plug, and a guide wall projecting on the plug surface inside the circular wall and around the plug. The base unit comprises a disk member which is provided with a receptacle exposed in a receptacle surface defined on the disk member. The disk member has a diameter slightly smaller than an inner diameter of the circular wall so that the disk member can fit within the circular wall when the transceiver unit is attached to the base. The disk member is formed in the receptacle surface with a guide groove of such a configuration that the guide wall is allowed to be inserted into the guide groove only when the guide wall opposes to the guide groove at a particular angular orientation where the plug comes to be connectable with the receptacle.

It is therefore clear that prior art electrical systems of the type described can be problematic to install and offer a great many opportunities for the installation to be defective in one way or another.

It is therefore an aim of embodiments of the invention to address these and other problems with the prior art, whether mentioned herein or not.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
Figure 1 shows a prior art detector assembly, comprising a detector base unit and a detector head;
Figure 2 shows a detector base according to a first embodiment of th e present invent ion including complementary cables;
Figure 3 shows the detector base of Figure 2 without the cables;
Figure 4 shows a schematic of a typical installation; and
Figure 5 shows attachment means according to an alternative embodiment of the invention.

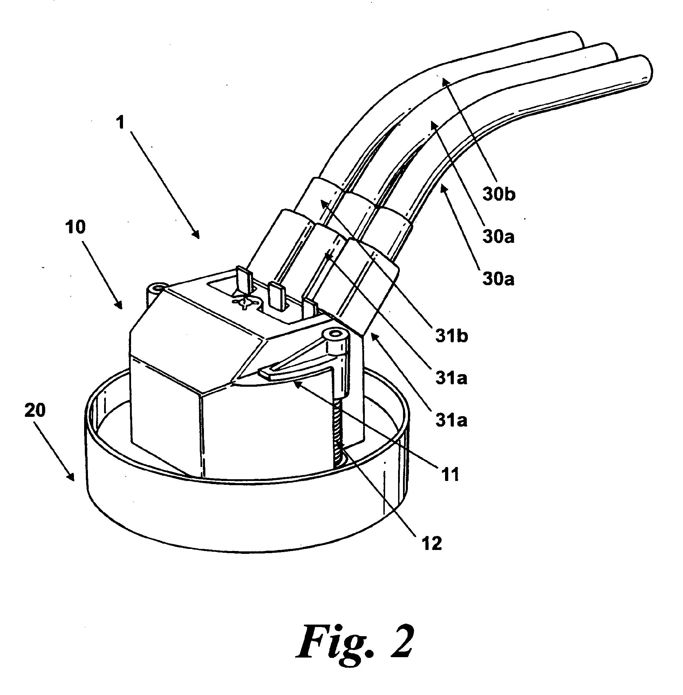

Figure 2 shows a detector base 1 according to an embodiment of the present invention. It comprises an upper section 10 for insertion into a suitably created hole in a ceiling panel, and a lower section 20, which abuts the exposed surface of the ceiling and is arranged to receive a functional unit, such as a smoke/fire sensor, sounder unit or the like. The base 1 is arranged to accept a prior art sensor 200.

The upper part 10 is of smaller diameter than the lower part so that when fitted, the upper part fits snugly into the hole, leaving the lower part exposed.

The upper part 10 comprises two retaining members 11. These retaining members 11 are rigid members mounted on a screw thread 12 such that in the stowed position, as shown in Figure 2, they do not interfere with the insertion of the base unit 1 into the hole which accommodates it. Once located in the hole, the retaining members 11 are rotated outwards into the ceiling void. The members 11 are accessible via suitable holes provided in the base, which are accessible from the underside of the base 1 when positioned.

The head of the screw thread 12 is accessed from the exposed lower portion 20. By using a screwdriver, the screw thread may be turned in a known way. This operation causes the retaining member 11 to be forced downwards along the thread until it contacts the hidden inner surface of the ceiling tile. By repeating this operation for the other retaining means 11, the base unit 1 may be securely positioned in the hole in the ceiling tile. In effect, the ceiling tile is securely sandwiched between the retaining means 11 and the lower portion 20.

This fitting operation is very straightforward and requires the drilling of only a single hole, using a hole-saw or similar and requires no accurate marrying up of a first part inside the ceiling void and a second part on the exposed ceiling surface as with prior art systems.

Before the base unit 1 is securely positioned, however, it is necessary to connect to it the electrical cables which are required to create the circuit. Unlike prior art systems, which require cables to be cut to length, have the insulation removed and the individual conductors stripped and connected to screw terminals, all of which introduce the possibility of error, preferred embodiments of th e present invention utilise prefabricated cable assemblies which eliminate or at least reduce the chance of such errors occurring.

Figure 2 shows the base unit 1, to which is connected three cables 30a, 30b each of which is terminated in a plug 31a, 31b. Two of the three cables connect the base unit to either adjacent base units or, for those base units at the end of the circuit, to another base unit and the controller.

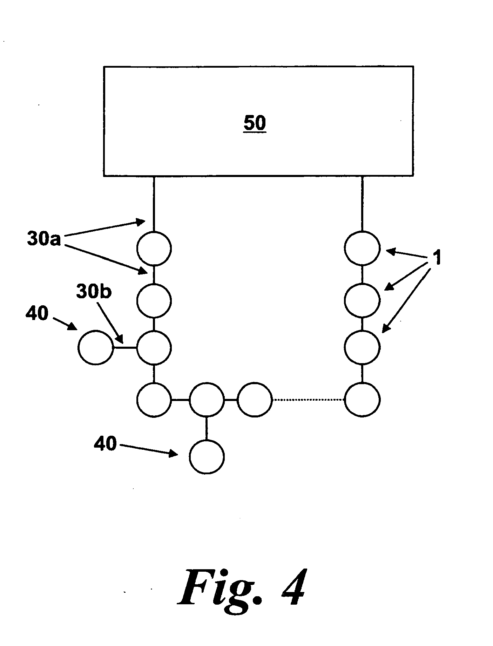

Figure 4 shows a typical configuration of many detector base units 1 connected in a daisy chain configuration to a controller 50. Note that in a typical installation, a typical chain may comprise many tens or even hundreds of detectors, and the whole system may include many such chains.

The controller 50 is operable to monitor the chain of detectors attached to it and to trigger an alarm if one of them detects smoke and/or heat.

Figure 4 shows the connections between adjacent detectors 1 in the daisy chain configuration. Each detector 1 must have at least two cables 30 a connected to it. Additionally, certain detectors in the circuit may be provided with a remote indicator 40 to signal which of the detectors in the chain has been triggered. For those detectors provided with such an indicator 40, a third connection using cable 30b is required.

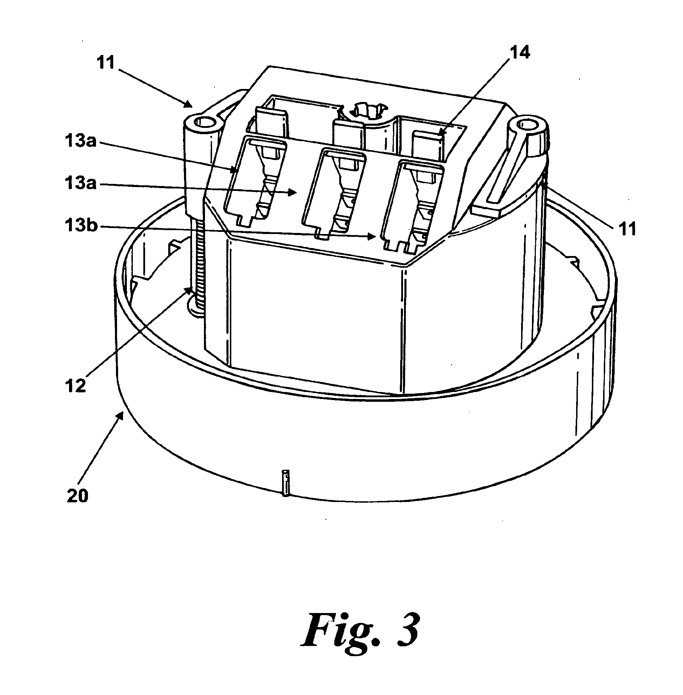

Figure 3 shows a view of a detector base 1 without the cables 30a, 30b connected. It clearly shows the three sockets 13a, 13b, provided to receive the corresponding cables 30. Two of the sockets 13a, are provided with an identical single keying slot at the base of the socket which corresponds to a complementary projection on cables 30a. The third socket 13b is provided with a double keying slot which corresponds with complementary projections on cable 30b.

Sockets 13a are the sockets which must be connected in any configuration to ensure a complete circuit is created. Single socket 13b is optional and is only required for detector bases which have a remote indicator 40 connected.

By use of different keying arrangements for the different types of connector, it is not possible to connect the wrong sort of device or cable into a particular socket, removing the possibility of a wiring error of this sort.

Other keying arrangements are of course possible. For instance, sockets 13a may be configured to receive a square plug and socket 13b may be configured to receive a round plug. There are many possibilities available to the skilled man.

Each of the sockets 13a, 13b is provided with a locking mechanism 14. This prevents the plugs 31a, 31b from being inadvertently pulled from its socket, thereby breaking the circuit. This is quite likely to happen when the distance between adjacent detectors could be of the order of tens of metres and connecting cables must be pulled through the ceiling void.

The locking mechanism comprises a resilient member, which is displaced upon pushing the plug into the socket, such that once the plug is fully inserted, the resilient member engages with a suitable notch or recess on the plug, preventing the removal of the plug unless the resilient member is first moved from the notch or recess. The resilient member is provided as a lever-type arrangement so that simple finger-pressure causes it to release the plug.

The cables 30a, 30b are provided in various lengths, pre-fitted with appropriate plugs 31a, 31b. As such, installing a system utilising embodiments of the invention involves no complex electrical installation and requires only connecting adjacent detector bases using the plugs and sockets provided.

It can be clearly seen that installing a system as described is much more straightforward than prior art systems, as many of the time-consuming operations which can introduce errors and faults into the system, are no longer required. As such, a system can be installed more quickly and with little or no chance of mis-wired connections.

In an added benefit, embodiments of the invention are backwards-compatible with prior art systems. Where embodiments of the invention are required to be fitted to an existing prior art system, the pre-supplied cables may be spliced and fitted as per the prior art systems.

Once all the detector base units 1 have been fitted and connected, the remaining task to complete the installation is to attach the sensor to the base unit. Advantageously, the same sensor unit as used in prior art systems may be used as the connectors in the base units according to an embodiment of the invention are identical to those used in the prior art.

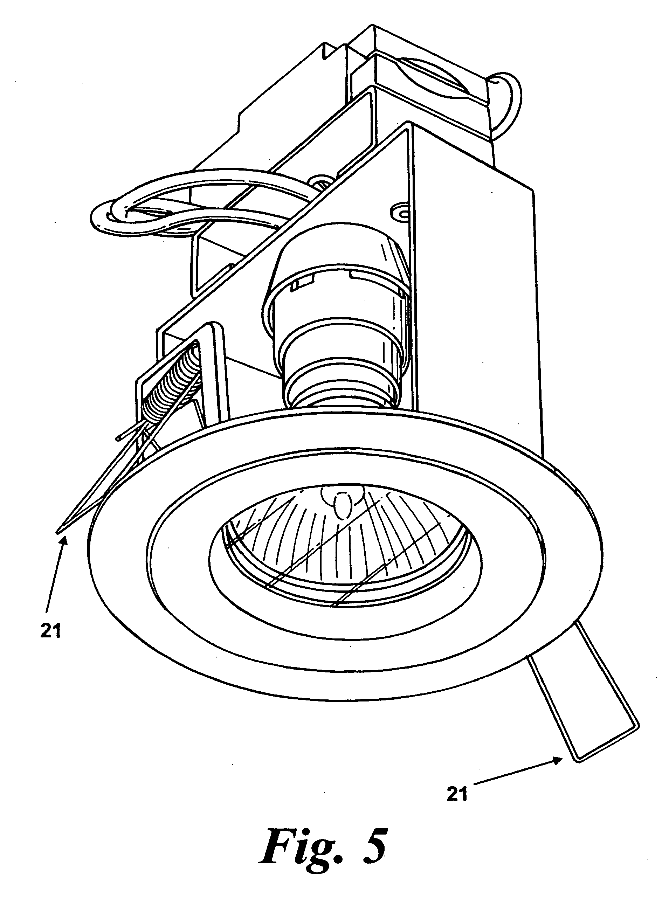

An alternative attachment means to the pivoting retaining members 11, disclosed previously, is a spring-loaded system, which may be suitable in certain installations. Figure 5 shows a similar system as used on a ceiling-mounted mains-voltage halogen light fitting. The appropriate parts can be easily adapted for use with embodiments of the invention.

In order to insert the base unit into the pre-drilled hole, the two spring-loaded retaining arms, 21 are forced upwards so that they do not impede insertion of the base. Once the base is in position, the spring-loaded arms 21 return to their natural position which is now against the interior surface of the ceiling, thus holding the base 1 in position.

Apart from this difference in the attachment means, the operation of this embodiment of the invention is identical to that previously described.

The base 1 may also be provided with a mechanically switched connection between the input and output connectors 13a. In this way, if a sensor head 200 is removed from a base 1, the circuit remains complete. If an individual sensor is then removed, for maintenance or some other reason, the daisy chain circuit remains complete and the alarm installation can still operate.

Advantageously, embodiments of the invention allow quicker, easier and more reliable installation of fire detection systems and address many of the problems experienced with prior art detectors and systems. Even more advantageously, embodiments of the invention are compatible with prior art systems and may be used interchangeably as needed.

## Claims

1. An electrical connection device (100) for fitting to a ceiling, comprising:
a first portion (10) of first diameter for insertion into a suitable hole in the ceiling;
a second portion (20) of second diameter, greater than the first diameter, arranged, in use, to abut the ceiling,
wherein the first portion comprises connection means, arranged to connect the connection device to at least one other connection device, the connection means being further connected to a plurality of terminals in the second portion, arranged to connect to an active unit, positionable in the second portion and the device further comprising integral attachment means (11) for retaining the device in position, the connection means comprising a plurality of electrical sockets (13), **characterised in that** each socket is keyed to mate only with a correspondingly keyed plug.

2. A device as claimed in claim 1 wherein the plurality of electrical sockets utilise more than one keying arrangement.

3. A device as claimed in claim 1 or 2, wherein the integral attachment means (11) comprises a pair of rotatable members arranged to extend into the ceiling void to clamp the ceiling between the members and the second portion.

4. A device as claimed in claim 1 or 2, wherein the integral attachment means comprises a pair of spring loaded clips (21) to extend into the ceiling void to clamp the ceiling between the members and the second portion.

5. A device as claimed in any preceding claim wherein the plurality of sockets (13) comprises at least a first 'in' socket and an 'out' socket for connecting the device to one of a neighbouring device and/or a controller.

6. A device as claimed in claim 5 wherein the device further comprises a third socket for connection to a remote indicator device.

7. A device as claimed in claim any preceding claim, further comprising an active unit.

8. A device as claimed in claim 7 wherein the active unit comprises at least one of a smoke detector, a fire detector, a sounder and an illuminated beacon.

9. A device as claimed in any preceding claim further comprising at least one cable (30) terminated with a corresponding plug (31).

## Patentansprüche

1. Elektrische Anschlussvorrichtung (100) zum Einfügen in eine Decke, enthaltend:
einen ersten Abschnitt (10) eines ersten Durchmessers zum Einfügen in ein geeignetes Loch in der Decke;
einen zweiten Abschnitt (20) eines zweiten Durchmessers, der größer ist als der erste Durchmesser, der in Verwendung derart angeordnet ist, dass er gegen die Decke stößt,
wobei der erste Abschnitt eine Verbindungseinrichtung enthält, die dazu eingerichtet ist, die Anschlussvorrichtung mit wenigstens einer weiteren Anschlussvorrichtung zu verbinden, wobei die Verbindungseinrichtung weiterhin mit einer Vielzahl von Anschlüssen in dem zweiten Abschnitt verbunden ist, die dazu eingerichtet sind, mit einer aktiven Einheit verbunden zu werden, und in dem zweiten Abschnitt positionierbar sind, und die Vorrichtung weiterhin integrale Anbringungseinrichtungen (11) enthält, die die Vorrichtung in Position halten, wobei die Verbindungseinrichtung eine Vielzahl elektrischer Buchsen (13) enthält, **dadurch gekennzeichnet, dass** jede Buchse derart formschlüssig ist, dass sie nur mit einem entsprechenden formschlüssigen Stecker zusammenpasst.

2. Vorrichtung nach Anspruch 1, bei der bei der Vielzahl elektrischer Buchsen mehr als eine formschlüssige Anordnung Verwendung findet.

3. Vorrichtung nach Anspruch 1 oder 2, bei der die integrale Anbringungseinrichtung (11) zwei drehbare Elemente enthält, die derart beschaffen sind, dass sie sich in den Deckenhohlraum erstrecken, um die Decke zwischen den Elementen und dem zweiten Abschnitt festzuklemmen.

4. Vorrichtung nach Anspruch 1 oder 2, bei der die integrale Anbringungseinrichtung zwei federgespannte Spangen (21) enthält, die sich in den Deckenhohlraum erstrecken, um die Decke zwischen den Elementen und dem zweiten Abschnitt festzuklemmen.

5. Vorrichtung nach einem der vorhergehenden Ansprüche, bei der die Vielzahl von Buchsen (13) wenigstens eine erste "Ein"-Buchse und eine "Aus"-Buchse enthält, um die Vorrichtung mit einer benachbarten Vorrichtung und/oder einer Steuereinheit zu verbinden.

6. Vorrichtung nach Anspruch 5, bei der die Vorrichtung weiterhin eine dritte Buchse für die Verbindung zu einer entfernten Anzeigeeinrichtung enthält.

7. Vorrichtung nach einem der vorhergehenden Ansprüche, weiterhin enthaltend eine aktive Einheit.

8. Vorrichtung nach Anspruch 7, bei der die aktive Einheit einen Rauchdetektor und/oder einen Feuerdetektor und/oder eine Tonerzeugungseinrichtung und/oder ein Signallicht enthält.

9. Vorrichtung nach einem der vorhergehenden Ansprüche, weiterhin enthaltend wenigstens ein Kabel (30), das in einem entsprechenden Stecker (31) endet.

## Revendications

1. Dispositif de connexion électrique (100) destiné à être installé sur un plafond, comprenant :
une première partie (10) de premier diamètre, destinée à être insérée dans un orifice approprié dans le plafond ;
une seconde partie (20) de second diamètre, supérieur au premier diamètre, agencée, durant l'utilisation, pour être contiguë au plafond,
dans lequel la première partie comprend des moyens de connexion, agencés pour connecter le dispositif de connexion à au moins un autre dispositif de connexion, les moyens de connexion étant en outre connectés à une pluralité de bornes dans la seconde partie, agencées pour se connecter à une unité active, positionnable dans la seconde partie, et le dispositif comprenant en outre des moyens de fixation intégraux (11) destinés à maintenir le dispositif en position, les moyens de connexion comprenant une pluralité d'embases électriques (13), **caractérisé en ce que** chaque embase présente un détrompage pour s'accoupler seulement avec une fiche à détrompage correspondante.

2. Dispositif selon la revendication 1, dans lequel la pluralité d'embases électriques utilisent plus d'un agencement de détrompage.

3. Dispositif selon la revendication 1 ou 2, dans lequel les moyens de fixation intégraux (11) comprennent une paire d'éléments rotatifs agencés pour s'étendre dans le vide de plafond pour serrer le plafond entre les éléments et la seconde partie.

4. Dispositif selon la revendication 1 ou 2, dans lequel les moyens de fixation intégraux comprennent une paire d'attaches à ressort (21) pour s'étendre dans le vide de plafond pour serrer le plafond entre les éléments et la seconde partie.

5. Dispositif selon une quelconque revendication précédente, dans lequel la pluralité de prises (13) comprend au moins une première embase « intérieure » et une embase « extérieure » pour connecter le dispositif à un élément parmi un dispositif avoisinant et/ou un contrôleur.

6. Dispositif selon la revendication 5, dans lequel le dispositif comprend en outre une troisième embase destinée à se connecter à un dispositif indicateur à distance.

7. Dispositif selon une quelconque revendication précédente, comprenant en outre une unité active.

8. Dispositif selon la revendication 7, dans lequel l'unité active comprend au moins un élément parmi un détecteur de fumée, un détecteur d'incendie, un dispositif d'alarme et une balise éclairée.

9. Dispositif selon une quelconque revendication précédente, comprenant en outre au moins un câble (30) se terminant avec une fiche correspondante (31).
